# EUROPÄISCHE PATENTSCHRIFT

(11) **EP 3 640 521 B1**
(45) Veröffentlichungstag und Bekanntmachung des Hinweises auf die Patenterteilung: **31.05.2023**
(21) Anmeldenummer: 18200990.2
(22) Anmeldetag: 17.10.2018
(51) Int. Cl.: F16P 3/14, G01V 8/00

(54) **ÜBERWACHUNGSVORRICHTUNG**
MONITORING DEVICE
DISPOSITIF DE SURVEILLANCE

(43) Veröffentlichungstag der Anmeldung: 22.04.2020
(73) Patentinhaber: Leuze electronic GmbH + Co. KG, 73277 Owen/Teck (DE)
(72) Erfinder: Brunner, Rolf, 82223 Eichenau (DE)
(74) Vertreter: Ruckh, Rainer Gerhard

(56) Entgegenhaltungen:
- DE-A1-102005 010 376

## Beschreibung

Die Erfindung betrifft eine Überwachungsvorrichtung.

Derartige Überwachungsvorrichtungen werden insbesondere zur Gefahrenbereichsüberwachung an gefahrbringenden Anlagen eingesetzt. Ein Gefahrenbereich an einer solchen Anlage wird mit einem optischen Sensor überwacht, der allgemein als scannender Sensor derart ausgebildet ist, dass mit den Lichtstrahlen einer Sende-/Empfangseinheit dieses optischen Sensors periodisch ein Überwachungsbereich abgetastet wird. Insbesondere kann der optische Sensor als Flächendistanzsensor, das heißt scannender Distanzsensor ausgebildet sein, mit welchem Positionen von Objekten im Überwachungsbereich bestimmt werden können.

Bei bekannten Überwachungsvorrichtungen werden scannende optische Sensoren derart eingesetzt, dass mit diesen eine Objektüberwachung nicht im gesamten Überwachungsbereich sondern nur innerhalb eines vorgegebenen Schutzfelds erfolgt. Das Schutzfeld ist als Parameter im optischen Sensor gespeichert, wobei deren Dimension an den zu überwachenden Gefahrenbereich bestmöglich angepasst wird.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungsignal generiert, dessen Schaltzustände angeben, ob sich innerhalb des Schutzfeldes ein Objekt befindet.

Dieses Objektfeststellungsignal wird an eine Steuerung ausgegeben, die die Anlage steuert. Wird ein Objektfeststellungsignal ausgegeben, das signalisiert, dass kein Objekt im Schutzfeld vorhanden ist, wird der Betrieb der Anlage frei gegeben. Generiert der optische Sensor ein Objektfeststellungsignal mit dem Schaltzustand, der einer Objektdetektion im Schutzfeld entspricht, wird durch dieses Objektfeststellungsignal die Anlage mittels der Steuerung stillgesetzt, um Gefahrenzustände zu vermeiden.

Abhängig von der jeweiligen Applikation oder auch abhängig vom Betriebszustand der Anlage kann es erforderlich sein, die Gefahrenbereichsüberwachung anzupassen. Dies wird dadurch erreicht, dass im optischen Sensor unterschiedliche Schutzfelder abgespeichert sind, wobei je nach Anforderung das am besten geeignete Schutzfeld aktiviert wird.

Nachteilig hierbei ist, dass mit der begrenzten Anzahl an Schutzfeldern keine ausreichende Anpassung an sich ändernde Randbedingungen der Gefahrenbereichsüberwachung möglich ist.

Weiterhin nachteilig ist, dass einerseits ein hoher Aufwand erforderlich ist, geeignete Schutzfelder im optischen Sensor zu hinterlegen. Weiterhin ist auch ein unerwünscht hoher Aufwand erforderlich, um im Bedarfsfall geeignete Schutzfelder auszuwählen und zu aktivieren.

Die DE 10 2005 010 376 A1 (D1) betrifft einen optoelektronischen Sensor zur Absicherung einer Maschine, insbesondere einer Abkant-, Biege- oder Stanzpresse, wobei der Sensor einen Lichtempfänger und eine mit dem Lichtempfänger verbundene Auswerte- und Steuereinrichtung aufweist, wobei während eines Überwachungsbetriebs mittels des Lichtempfängers ein Schutzfeld der Maschine überwachbar ist und entsprechende Empfangssignale an die Auswerte- und Steuereinrichtung ausgebbar sind und wobei mittels der Auswerte- und Steuereinrichtung in Abhängigkeit von den Empfangssignalen des Lichtempfängers ein elektrisches Steuersignal für die Maschine erzeugbar ist. Der Sensor besitzt ferner einen Funkempfänger, der mit der Auswerte- und Steuereinrichtung verbunden ist, wobei mittels des Funkempfängers während eines Parametrierungsbetriebs Funkbefehlssignale empfangbar sind, wobei die Funkbefehlssignale mittels der Auswerte- und Steuereinrichtung hinsichtlich darin enthaltener Betriebsparameter auswertbar sind und wobei während des Überwachungsbetriebs der Sensor mittels der Auswerte- und Steuereinrichtung zum Überwachen des Schutzfelds gemäß der in den Funkbefehlssignalen enthaltenen Betriebsparameter ansteuerbar ist.

Der Erfindung liegt die Aufgabe zugrunde, eine Überwachungsvorrichtung mit erhöhter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungsvorrichtung mit einem optischen Sensor, welcher eine Sende-/Empfangseinheit mit wenigstens einem Lichtstrahlen emittierenden Sender und wenigstens einem Lichtstrahlen empfangenden Empfänger aufweist, wobei die Lichtstrahlen innerhalb eines Überwachungsbereichs, insbesondere eines zwei- oder dreidimensionalen Überwachungsbereichs geführt sind. Dabei generierte Messwerte des optischen Sensors sind als sichere Telegramme einer Sicherheitssteuerung zugeführt. In der Sicherheitssteuerung erfolgt eine Auswertung der Messdaten zur Erzeugung eines Objektfeststellungsignals. Der optische Sensor weist wenigstens einen fehlersicheren Ausgang auf, über welchen die sicheren Telegramme ausgegeben werden. Die sicheren Telegramme werden in Form eines gesicherten Ethernet-Telegramms oder über ein sicheres Feldbussystem an die Sicherheitssteuerung (4) ausgegeben.

Der Grundgedanke der Erfindung besteht darin, dass der optische Sensor der Überwachungsvorrichtung allein zur Messdatengenerierung eingesetzt wird, wogegen die Auswertung der Messdaten in die Sicherheitssteuerung der Überwachungsvorrichtung verlagert ist.

Dies ermöglicht eine verbesserte, umfangreichere und auch einfachere an sich verändernde Randbedingungen anpassbare Überwachungsfunktion, als dieses bei bekannten Überwachungsvorrichtungen der Fall ist, die mit optischen Sensoren arbeiten, welche selbst die komplette Messdatenauswertung in Form einer Schutzfeldüberwachung übernehmen.

Die Sicherheitssteuerung dient allgemein zur Steuerung einer Anlage, wobei der Begriff Anlage generell auch Maschinen aller Art oder auch Fahrzeuge umfasst.

Zur Steuerung werden insbesondere die im optischen Sensor generierten Messdaten verwendet.

Insbesondere wird mit der Sicherheitssteuerung eine gefahrbringende Anlage überwacht, wobei ein Gefahrenbereich der Anlage mit dem optischen Sensor überwacht wird.

Erfindungsgemäß wird der Umstand ausgenutzt, dass die Sicherheitssteuerung die zentrale Steuerungsfunktion der Anlage übernimmt, wobei sämtliche hierfür benötigten Informationen in der Sicherheitssteuerung vorhanden sind.

Durch die erfindungsgemäße Verlagerung der Auswertung der Messdaten des optischen Sensors wird eine flexible, an die jeweilige Gefahrensituation oder an die jeweils aktuelle Randbedingung der Anlage angepasste Objektdetektion ermöglicht.

Insbesondere kann die Verarbeitung in der Sicherheitssteuerung an die aktuellen Anforderungen derart angepasst werden, dass innerhalb des gesamten Überwachungsbereichs oder nur in einem oder mehreren Teilbereichen des Überwachungsbereichs eine Objektdetektion erfolgt.

Die Auswahl, ob eine Objektdetektion im gesamten Überwachungsbereich oder nur in Teilbereichen hiervon erfolgt, kann abhängig von applikationsspezifischen Anforderungen flexibel in der Sicherheitssteuerung vorgenommen werden, wobei insbesondere die relevanten Bereiche in nahezu beliebig rascher Folge gewechselt werden können.

Dadurch, dass bedarfsweise die Objektdetektion nur in einem oder mehreren Teilbereichen, nicht jedoch im gesamten Überwachungsbereich erfolgt, müssen für eine Objektdetektion nicht alle Messwerte ausgewertet werden, so dass die Auswertung für eine Objektdetektion sehr schnell erfolgen kann.

Weiterhin kann in Abhängigkeit der im optischen Sensor generierten Messwerte auch eine Hintergrundunterdrückung derart durchgeführt werden, dass Objekte vor einem Hintergrund erkannt werden, wobei die Hintergrundwerte bei der Objektdetektion nicht berücksichtigt werden.

Zusätzlich zu den Entfernungswerten kann der Sensor für jede Messung ein Maß für die Objekthelligkeit ausgeben. Dadurch kann die Steuerung die Helligkeit der Objekte ermitteln und so beispielsweise die Position von Reflektoren im Raum erkennen.

Gemäß einer ersten Ausgestaltung werden in der Sicherheitssteuerung Objektfeststellungsignale in Form binärer Schaltsignale generiert, deren Schaltzustände angeben ob sich ein Objekt im Überwachungsbereich oder in einem Teilbereich befindet oder nicht.

Bei sicherheitstechnischen Anwendungen für eine Gefahrenbereichsüberwachung an einer Anlage kann die Sicherheitssteuerung diese Schaltsignale zur Steuerung der Anlage verwenden, insbesondere derart, dass die Sicherheitssteuerung die Anlage stillsetzt, wenn das Schaltsignal den Schaltzustand einnimmt, dass ein Objekt im Überwachungsbereich oder in einem Teilbereich vorhanden ist.

Damit werden von der Anlage ausgehende Gefährdungen, insbesondere für Personen, die sich im Gefahrenbereich aufhalten, vermieden.

Gemäß einer weiteren Ausgestaltung werden in der Sicherheitssteuerung Objektfeststellungsignale generiert, welche in Form von Positionen, Geschwindigkeiten und/oder Bewegungsrichtungen von Objekten ausgebildet sind.

Auch in diesem Fall können die Objektfeststellungsignale zur Steuerung der Anlage verwendet werden. In sicherheitstechnischen Anwendungen kann beispielsweise anhand der Objektfeststellungsignale erfasst werden, ob sich ein Objekt oder eine Person dem Gefahrenbereich der Anlage nähert oder bereits in diesen eingedrungen ist. Abhängig hiervon kann die Sicherheitssteuerung geeignete Sicherheitsmaßnahmen treffen, beispielsweise die Anlage in einen Sicherheitsbetrieb versetzen oder komplett stillsetzen.

Zusätzlich können die Messdaten für nicht sicherheitsgerichtete Aufgaben verwendet werden. Die Messdaten können beispielsweise für die Navigation eines fahrerlosen Fahrzeugs verwendet werden. Hierfür ist eine Auswertung in einer Steuerung möglich, die keine Sicherheitssteuerung bildet.

Erfindungsgemäß werden die Messdaten als sichere Telegramme, das heißt als fehlergesicherte Daten an die Sicherheitssteuerung übertragen, die selbst einen fehlersicheren Aufbau aufweist. Damit sind wesentliche Voraussetzungen für den Einsatz der Überwachungsvorrichtung im Bereich der Sicherheitstechnik, insbesondere im Bereich des Personenschutzes erfüllt.

Besonders vorteilhaft weist hierzu der optische Sensor selbst auch einen fehlersicheren Aufbau auf und bildet damit einen Sicherheitssensor.

Insbesondere weist der optische Sensor wenigstens einen fehlersicheren Ausgang auf, über welchen die sicheren Telegramme ausgegeben werden.

Der Ausgang kann hierzu beispielsweise zweikanalig ausgebildet sein, oder einen redundanten Aufbau aufweisen.

Besonders vorteilhaft werden die sicheren Telegramme in Form eines gesicherten Ethernet-Telegramms oder über ein sicheres Feldbussystem an die Sicherheitssteuerung ausgegeben.

Der optische Sensor bildet generell ein scannendes System, bei welchem die Lichtstrahlen wiederholt, vorzugsweise periodisch den Überwachungsbereich überstreichen.

Vorteilhafte Ausgestaltungen derartiger optischer Sensoren sind derart, dass die Sende-/Empfangseinheit des optischen Sensors in einem rotierenden Messkopf integriert ist, oder dass die Lichtstrahlen der stationär angeordneten Sende-/Empfangseinheit über eine rotierende Ablenkeinheit als Bestandteil des optischen Sensors geführt sind, wodurch die Lichtstrahlen periodisch innerhalb des Überwachungsbereichs geführt sind.

Gemäß einer ersten Variante sind die Messdaten des optischen Sensors Distanzwerte.

Der optische Sensor bildet dann einen Flächendistanzsensor, das heißt einen scannenden Distanzsensor, wobei mit der Sende-/Empfangseinheit Distanzen von zu detektierenden Objekten beispielsweise nach einem Impuls-Laufzeit-Verfahren bestimmt werden.

Gemäß einer zweiten Variante sind die Messdaten des optischen Sensors am Empfänger registrierte Lichtstärkewerte.

In diesem Fall bildet der optische Sensor einen scannenden Lichttaster. Die auf den Empfänger auftreffenden Lichtstärkewerte generieren entsprechend Empfangssignale am Empfänger, deren Amplituden ein Maß für die Lichtstärkewerte sind.

Generell werden bei beiden Varianten die Messdaten in Abhängigkeit der aktuellen Strahlrichtung generiert.

Vorzugsweise ist hierzu im optischen Sensor ein Winkelgeber integriert, dessen Signale die aktuelle Strahlenrichtung der Lichtstrahlen wiedergeben.

Bei einem Flächendistanzsensor werden dann die aktuellen Distanzwerte und die aktuellen Signale des Winkelgebers als Messdaten ausgegeben.

Bei einem scannenden Lichttaster werden entsprechend die Amplituden der aktuellen Empfangssignale des Empfängers mit den aktuellen Signalen des Winkelgebers als Messdaten ausgegeben.

Anhand dieser Messdaten kann dann in der Sicherheitssteuerung ortsaufgelöst im Überwachungsbereich oder in einem Teilbereich eine Auswertung zur Generierung von Objektfeststellungsignalen erfolgen.

Die Erfindung wird im Folgenden anhand der Zeichnungen erläutert. Es zeigen:
- Figur 1:: Schematische Darstellung eines Ausführungsbeispiels der erfindungsgemäßen Überwachungsvorrichtung.
- Figur 2:: Erstes Ausführungsbeispiel eines optischen Sensors für die Überwachungsvorrichtung gemäß Figur 1.
- Figur 3:: Zweites Ausführungsbeispiel eines optischen Sensors für die Überwachungsvorrichtung gemäß Figur 1.

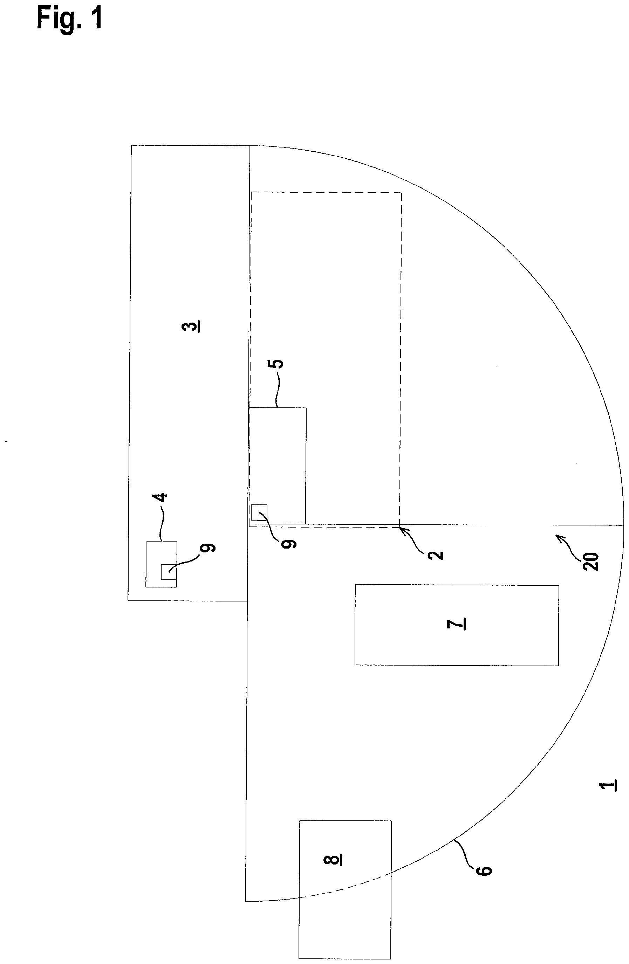

Figur 1 zeigt schematisch ein Ausführungsbeispiel der erfindungsgemäßen Überwachungsvorrichtung 1. Die Überwachungsvorrichtung 1 wird im vorliegenden Fall im Bereich der Sicherheitstechnik eingesetzt. Dabei wird ein Gefahrenbereich 2 im Vorfeld einer Anlage 3 überwacht. Die Anlage 3 wird mit einer Sicherheitssteuerung 4 gesteuert. Zur Erfüllung der sicherheitstechnischen Anforderungen weist die Sicherheitssteuerung 4 einen fehlersicheren Aufbau auf. Vorteilhaft bildet auch der optische Sensor 5 einen Sicherheitssensor.

Zur Überwachung des Gefahrenbereichs 2 weist die Überwachungsvorrichtung 1 einen optischen Sensor 5 auf, mit dem ein Überwachungsbereich 6 überwacht werden kann. Entsprechend der maximalen Reichweite des optischen Sensors 5 wird mit diesem im vorliegenden Fall ein ebener, halbkreisförmiger Überwachungsbereich 6 überwacht. Der optische Sensor 5 ist so positioniert, dass dieser Überwachungsbereich 6 die Anlage 3 mit dem Gefahrenbereich 2 überwacht.

In Figur 1 ist eine Momentaufnahme des Gefahrenbereichs 2 dargestellt. Je nach Arbeitszustand der Anlage 3 kann die Position und die Größe des Gefahrenbereichs 2 verschieden sein.

Wie Figur 1 weiter zeigt, liegen (zumindest teilweise) im Überwachungsbereich 6 auch weitere Gegenstände 7, 8 wie Fertigungseinrichtungen, Regale, Fördereinheiten oder dergleichen. Generell gehen von diesen Gegenständen 7, 8 keine Gefahren aus.

Der optische Sensor 5 und die Sicherheitssteuerung 4 ergänzen sich zur Überwachungsvorrichtung 1. Zwischen diesen Einheiten erfolgt ein fehlersicherer Austausch von Daten. Insbesondere werden im optischen Sensor 5 generierte Messdaten als fehlersichere Telegramme an die Sicherheitssteuerung 4 gesendet. In der Sicherheitssteuerung 4 werden die Messdaten zur Generierung von Objektfeststellungsignalen ausgewertet. Zur Durchführung des Datenaustausches weist der optische Sensor 5 wie auch die Sicherheitssteuerung 4 eine Schnittstelle 9 auf.

Die Schnittstellen 9 können als fehlersichere Ethernet-Schnittstellen ausgebildet sein, über welche fehlersichere Ethernet-Telegramme, zum Beispiel UDP-Telegramme gesendet werden. Alternativ können die Schnittstellen 9 als Busschnittstellen eines sicheren Feldbussystems, wie zum Beispiel PROFIsafe ausgebildet sein.

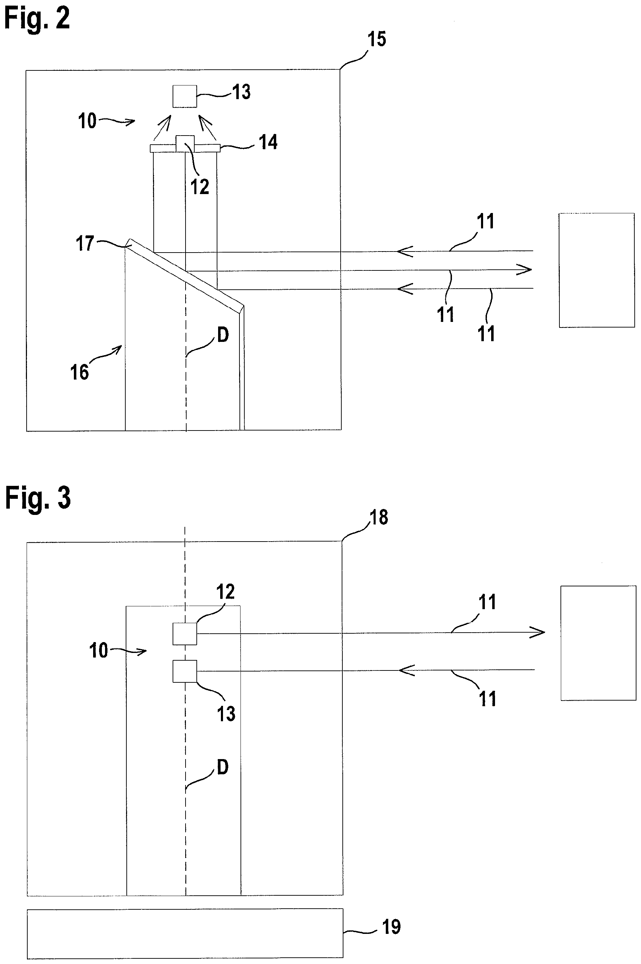

Figur 2 zeigt ein erstes Ausführungsbeispiel des optischen Sensors 5. Der optische Sensor 5 weist eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt zurückreflektierten Lichtstrahlen 11 werden über den Umlenkspiegel 17 geführt. Durch die Drehbewegung des Umlenkspiegels 17 werden die Lichtstrahlen 11 periodisch im Überwachungsbereich 6 geführt. Mittels eines Winkelgebers wird die aktuelle Drehstellung des Umlenkspiegels 17 und somit die aktuelle Strahlenrichtung der Lichtstrahlen 11 erfasst.

Im vorliegenden Fall bildet die Sende-/Empfangseinheit 10 einen nach einem Puls-Laufzeit-Verfahren arbeitenden Distanzsensor. Der optische Sensor 5 bildet somit einen Flächendistanzsensor.

In diesem Fall werden vom optischen Sensor 5 als Messwerte die aktuellen Distanzwerte mit den aktuellen Strahlenrichtungen der Lichtstrahlen 11 an die Sicherheitssteuerung 4 ausgegeben.

Alternativ kann der optische Sensor 5 auch als scannender Lichttaster ausgebildet sein. In diesem Fall werden als Messdaten die am Ausgang des Empfängers 13 anstehenden Amplituden der Empfangssignalen als Maß für die auf den Empfänger 13 auftreffenden Lichtstärken mit den aktuellen Strahlrichtungen der Lichtstrahlen 11 an die Sicherheitssteuerung 4 ausgegeben.

Figur 3 zeigt eine zweite Ausführungsform des optischen Sensors 5. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Überwachungsbereich 6. Ansonsten entspricht der optische Sensor 5 gemäß Figur 3 der Ausführungsform gemäß Figur 2.

Erfindungsgemäß erfolgt die Auswertung der Messwerte in der Sicherheitssteuerung 4. In der Sicherheitssteuerung 4 werden anhand der Messdaten generell Objektfeststellungsignale generiert.

Von der Sicherheitssteuerung 4 kann vorgegeben werden, ob diese Objektdetektion im gesamten Überwachungsbereich 6 erfolgt oder in wenigstens einem Teilbereich 20 des Überwachungsbereichs 6, wobei ein solcher Teilbereich 20 in Figur 1 dargestellt ist. Der Gefahrenbereich 2 ist in diesem Teilbereich 20 enthalten.

Bei der in Figur 1 dargestellten Situation ist es vorteilhaft, für eine Objektdetektion nur die Messdaten des optischen Sensors 5 innerhalb des Teilbereichs 20 auszuwerten, da mit diesem der Gefahrenbereich 2 vollständig erfasst wird und die nicht interessierenden Gegenstände 7, 8 einfach ausgeblendet werden können.

Je nachdem, wie sich der Gefahrenbereich 2 im Lauf der Zeit verändert, kann von der Sicherheitssteuerung 4 zeitabhängig geänderte Teilbereiche 20 vorgegeben werden, innerhalb derer die Auswertung der Messdaten erfolgt. Weiterhin kann auch im gesamten Überwachungsbereich 6 eine Objektdetektion erfolgen. Da die Gegenstände 7, 8 in den Überwachungsbereich 6 ragen, können diese mittels einer Hintergrundunterdrückung eliminiert werden, das heißt die Konturen der Gegenstände 7, 8 werden zunächst ohne Objekt als Hintergrund erfasst, wobei dann bei der Objektdetektion diese Hintergrundmessdaten eliminiert werden.

Gemäß einer ersten Variante werden in der Sicherheitssteuerung Objektfeststellungsignale in Form binärer Schaltsignale generiert, deren Schaltzustände angeben ob sich ein Objekt im Überwachungsbereich oder in einem Teilbereich befindet oder nicht.

Diese Schaltsignale können direkt zur Steuerung der Anlage 3 genutzt werden. Insbesondere wird die Anlage 3 stillgesetzt, wenn mit einem Schaltsignal ein Objekteingriff im Gefahrenbereich 2 gemeldet wird.

Gemäß einer zweiten Variante werden in der Sicherheitssteuerung Objektfeststellungsignale generiert, welche in Form von Positionen, Geschwindigkeiten Helligkeiten und/oder Bewegungsrichtungen von Objekten ausgebildet sind.

Auch diese Objektfeststellungsignale können zur Steuerung des Betriebs der Anlage 3 verwendet werden. Beispielsweise kann bei Registrieren eines Objekts, das sich dem Gefahrenbereich 2 nähert, die Anlage 3 in einen Betriebsmodus geschaltet werden, in dem von der Anlage 3 keine unmittelbaren Gefahren mehr ausgehen, beispielsweise derart, dass mit der Anlage 3 durchgeführte Arbeitsprozesse stark verlangsamt durchgeführt werden.

### Bezugszeichenliste

- (1): Überwachungsvorrichtung
- (2): Gefahrenbereich
- (3): Anlage
- (4): Sicherheitssteuerung
- (5): Optischer Sensor
- (6): Überwachungsbereich
- (7): Gegenstand
- (8): Gegenstand
- (9): Schnittstelle
- (10): Sende-/Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel
- (20): Teilbereich

- (D): Drehachse

## Patentansprüche

1. Überwachungsvorrichtung (1) mit einem optischen Sensor (5), welcher eine Sende-/Empfangseinheit (10) mit wenigstens einem Lichtstrahlen (11) emittierenden Sender (12) und wenigstens einem Lichtstrahlen (11) empfangenden Empfänger (13) aufweist, wobei die Lichtstrahlen (11) innerhalb eines Überwachungsbereichs (6) geführt sind, wobei dabei generierte Messwerte des optischen Sensors (5) als sichere Telegramme einer Sicherheitssteuerung (4) zugeführt sind, wobei in der Sicherheitssteuerung (4) eine Auswertung der Messdaten zur Erzeugung eines Objektfeststellungsignals erfolgt, **dadurch gekennzeichnet, dass** der optische Sensor (5) wenigstens einen fehlersicheren Ausgang aufweist, über welchen die sicheren Telegramme ausgegeben werden, und dass die sicheren Telegramme in Form eines gesicherten Ethernet-Telegramms oder über ein sicheres Feldbussystem an die Sicherheitssteuerung (4) ausgegeben werden.

2. Überwachungsvorrichtung (1) nach Anspruch 1, **dadurch gekennzeichnet, dass** der optische Sensor (5) ein Sicherheitssensor ist.

3. Überwachungsvorrichtung (1) nach einem der Ansprüche 1 oder 2, **dadurch gekennzeichnet, dass** die Sende-/Empfangseinheit (10) des optischen Sensors (5) in einem rotierenden Messkopf (18) integriert ist, oder dass die Lichtstrahlen (11) der stationär angeordneten Sende-/Empfangseinheit (10) über eine rotierende Ablenkeinheit (16) als Bestandteil des optischen Sensors (5) geführt sind, wodurch die Lichtstrahlen (11) periodisch innerhalb des Überwachungsbereichs (6) geführt sind.

4. Überwachungsvorrichtung (1) nach einem der Ansprüche 1 bis 3, **dadurch gekennzeichnet, dass** die Messdaten des optischen Sensors (5) am Empfänger (13) registrierte Lichtstärkewerte sind.

5. Überwachungsvorrichtung (1) nach einem der Ansprüche 1 bis 4, **dadurch gekennzeichnet, dass** die Messdaten des optischen Sensors (5) Distanzwerte sind.

6. Überwachungsvorrichtung (1) nach einem der Ansprüche 1 bis 5, **dadurch gekennzeichnet, dass** die Messdaten in Abhängigkeit der aktuellen Strahlrichtung generiert sind.

7. Überwachungsvorrichtung (1) nach einem der Ansprüche 1 bis 6, **dadurch gekennzeichnet, dass** anhand der Messdaten in der Sicherheitssteuerung (4) eine Objektdetektion innerhalb des gesamten Überwachungsbereichs (6) durchgeführt ist.

8. Überwachungsvorrichtung (1) nach Anspruch 7, **dadurch gekennzeichnet, dass** in der Sicherheitssteuerung (4) eine Separierung von Objekten vor einem Hintergrund erfolgt.

9. Überwachungsvorrichtung (1) nach einem der Ansprüche 1 bis 6, **dadurch gekennzeichnet, dass** in der Sicherheitssteuerung (4) ein oder mehrere Teilbereiche (20) des Überwachungsbereichs (6) selektiert werden, wobei nur in den Teilbereichen (20) Objektdetektionen durchgeführt werden.

10. Überwachungsvorrichtung (1) nach einem der Ansprüche 7 und 9 **dadurch gekennzeichnet, dass** in der Sicherheitssteuerung (4) Objektfeststellungsignale in Form binärer Schaltsignale generiert werden, deren Schaltzustände angeben ob sich ein Objekt im Überwachungsbereich (6) oder in einem Teilbereich (20) befindet oder nicht.

11. Überwachungsvorrichtung (1) nach einem der Ansprüche 7 und 9, **dadurch gekennzeichnet, dass** in der Sicherheitssteuerung (4) Objektfeststellungsignale generiert werden, welche in Form von Positionen, Geschwindigkeiten, Helligkeiten und/oder Bewegungsrichtungen von Objekten ausgebildet sind.

12. Überwachungsvorrichtung (1) nach einem der Ansprüche 1 bis 12, **dadurch gekennzeichnet, dass** die Sicherheitssteuerung (4) zur Steuerung einer Anlage (3) ausgebildet ist, wobei ein Gefahrenbereich (2) der Anlage (3) mit dem optischen Sensor (5) überwacht ist.

13. Überwachungsvorrichtung (1) nach Anspruch 12, **dadurch gekennzeichnet, dass** die Anlage (3) in Abhängigkeit von in der Sicherheitssteuerung (4) generierten Objektfeststellungsignalen gesteuert ist.

14. Überwachungsvorrichtung (1) nach einem der Ansprüche 1 bis 6, **dadurch gekennzeichnet, dass** die Messdaten in einer Steuerung für nicht sicherheitsgerichtete Aufgaben verarbeitet werden.

## Claims

1. A monitoring device (1) having an optical sensor (5) which has a transmitting/receiving unit (10) with at least one transmitter (12) emitting light beams (11) and at least one receiver (13) receiving light beams (11), the light beams (11) being guided within a monitoring region (6), in which case generated measured values of the optical sensor (5) are fed as secure telegrams to a safety controller (4), wherein the measured data are evaluated in the safety control (4) to generate an object detection signal, **characterised in that** the optical sensor (5) has at least one fail-safe output via which the safe telegrams are output, and **in that** the safe telegrams are output to the safety control (4) in the form of a safe Ethernet telegram or via a safe field bus system.

2. The monitoring device (1) according to claim 1, **characterised in that** the optical sensor (5) is a safety sensor.

3. The monitoring device (1) according to one of the claims 1 or 2, **characterised in that** the transmitting/receiving unit (10) of the optical sensor (5) is integrated in a rotating measuring head (18), or **in that** the light beams (11) of the stationarily arranged transmitting/receiving unit (10) are guided via a rotating deflecting unit (16) as a component of the optical sensor (5), as a result of which the light beams (11) are guided periodically within the monitoring area (6).

4. The monitoring device (1) according to one of claims 1 to 3, **characterised in that** the measurement data of the optical sensor (5) are light intensity values registered at the receiver (13).

5. The monitoring device (1) according to one of the claims 1 to 4, **characterised in that** the measurement data of the optical sensor (5) are distance values.

6. The monitoring device (1) according to one of the claims 1 to 5, **characterised in that** the measurement data are generated as a function of the current beam direction.

7. The monitoring device (1) according to one of the claims 1 to 6, **characterised in that** an object detection is carried out within the entire monitoring area (6) on the basis of the measurement data in the safety control (4).

8. The monitoring device (1) according to claim 7, **characterised in that** a separation of objects in front of a background is carried out in the safety control (4).

9. The monitoring device (1) according to one of the claims 1 to 6, **characterised in that** one or more sub-areas (20) of the monitoring area (6) are selected in the security control (4), wherein object detections are only carried out in the sub-areas (20).

10. The monitoring device (1) according to one of claims 7 and 9, **characterised in that** object detection signals in the form of binary switching signals are generated in the safety controller (4), the switching states of which indicate whether or not an object is located in the monitoring area (6) or in a partial area (20).

11. The monitoring device (1) according to one of the claims 7 and 9, **characterised in that** in the safety control (4), object detection signals are generated which are in the form of positions, speeds, brightnesses and/or movement directions of objects.

12. The monitoring device (1) according to one of claims 1 to 12, **characterised in that** the safety controller (4) is designed to control a system (3), a danger area (2) of the system (3) being monitored by the optical sensor (5).

13. The monitoring device (1) according to claim 12, **characterized in that** the system (3) is controlled as a function of object detection signals generated in the safety controller (4).

14. The monitoring device (1) according to one of the claims 1 to 6, **characterised in that** the measurement data are processed in a controller for non-safety-related tasks.

## Revendications

1. Dispositif de surveillance (1) comportant un capteur optique (5) doté d'une unité de transmission/réception (10) avec au moins un émetteur (12) émettant des faisceaux lumineux (11) et au moins un récepteur (13) recevant des faisceaux lumineux (11), les faisceaux lumineux (11) étant guidés à l'intérieur d'une zone de surveillance (6), dans laquelle les valeurs de mesure génériques du capteur optique (5) sont transmises sous forme de télégrammes sécurisés à un contrôleur de sécurité (4), dans lequel les données mesurées sont évaluées dans la commande de sécurité (4) pour générer un signal de détection d'objet, **caractérisé par le fait que** le capteur optique (5) possède au moins une sortie de sécurité par laquelle les télégrammes sécurisés sont émis, et **par le fait que** les télégrammes sécurisés sont émis vers la commande de sécurité (4) sous la forme d'un télégramme Ethernet sécurisé ou par l'intermédiaire d'un système de bus de terrain sécurisé.

2. Dispositif de surveillance (1) selon la revendication 1, **caractérisé par le fait que** le capteur optique (5) est un capteur de sécurité.

3. Dispositif de surveillance (1) selon l'une des revendications 1 ou 2, **caractérisé par le fait que** l'unité d'émission/réception (10) du capteur optique (5) est intégrée dans une tête de mesure rotative (18), ou **par le fait que** les faisceaux lumineux (11) de l'unité d'émission/ réception stationnaire (10) sont guidés par une unité de déviation rotative (16) en tant que composant du capteur optique (5), de sorte que les faisceaux lumineux (11) sont guidés périodiquement dans la zone de surveillance (6).

4. Dispositif de surveillance (1) selon l'une des revendications 1 à 3, **caractérisé par le fait que** les données de mesure du capteur optique (5) sont des valeurs d'intensité lumineuse enregistrées au niveau du récepteur (13).

5. Dispositif de surveillance (1) selon l'une des revendications 1 à 4, **caractérisé par le fait que** les données de mesure du capteur optique (5) sont des valeurs de distance.

6. Dispositif de surveillance (1) selon l'une des revendications 1 à 5, **caractérisé par le fait que** les données de mesure sont générées en fonction de la direction du faisceau actuel.

7. Dispositif de surveillance (1) selon l'une des revendications 1 à 6, **caractérisé par le fait qu'**une détection d'objet est effectuée dans l'ensemble de la zone de surveillance (6) sur la base des données de mesure dans la commande de sécurité (4).

8. Dispositif de surveillance (1) selon la revendication 7, **caractérisé par le fait qu'**une séparation des objets devant un arrière-plan est effectuée dans la commande de sécurité (4).

9. Dispositif de surveillance (1) selon l'une des revendications 1 à 6, **caractérisé par le fait qu'**une ou plusieurs sous-zones (20) de la zone de surveillance (6) sont sélectionnées dans la commande de sécurité (4), les détections d'objets n'étant effectuées que dans les sous-zones (20).

10. Dispositif de surveillance (1) selon l'une des revendications 7 et 9, **caractérisé par le fait que** des signaux de détection d'objet sous forme de signaux de commutation binaires sont générés dans la commande de sécurité (4), dont les états de commutation indiquent si un objet se trouve ou non dans la zone de surveillance (6) ou dans une zone partielle (20).

11. Dispositif de surveillance (1) selon l'une des revendications 7 et 9, **caractérisé par le fait que** la commande de sécurité (4) génère des signaux de détection d'objets qui se présentent sous la forme de positions, de vitesses, de luminosités et/ou de directions de mouvement des objets.

12. Dispositif de surveillance (1) selon l'une des revendications 1 à 12, **caractérisé par le fait que** le contrôleur de sécurité (4) est conçu pour commander un système (3), une zone dangereuse (2) du système (3) étant surveillée par le capteur optique (5).

13. Dispositif de surveillance (1) selon la revendication 12, **caractérisé en ce que** le système (3) est commandé en fonction des signaux de détection d'objets générés dans le contrôleur de sécurité (4).

14. Dispositif de surveillance (1) selon l'une des revendications 1 à 6, **caractérisé en ce que** les données de mesure sont traitées dans un contrôleur pour des tâches non liées à la sécurité.
